# EUROPÄISCHE PATENTSCHRIFT

(11) **EP 1 133 424 B1**
(45) Veröffentlichungstag und Bekanntmachung des Hinweises auf die Patenterteilung: **17.12.2003**
(21) Anmeldenummer: 99972590.6
(22) Anmeldetag: 25.10.1999
(51) Int. Cl.: B60T 13/26, B60T 15/04, B60T 17/18

(54) **PARK- UND RANGIERVENTIL FÜR ANHÄNGEFAHRZEUGE MIT EINER FEDERSPEICHER-FESTSTELLBREMSE**
PARKING AND MANOEUVERING VALVE FOR TRAILERS HAVING A SPRING-LOADED PARKING BRAKE
VALVE DE FREIN DE STATIONNEMENT ET DE MANOEUVRE POUR VEHICULES TRACTES COMPORTANT UN FREIN DE STATIONNEMENT A RESSORT ACCUMULATEUR

(30) Priorität: 20.11.1998 DE 19853718
(43) Veröffentlichungstag der Anmeldung: 19.09.2001
(73) Patentinhaber: KNORR-BREMSE Systeme für Nutzfahrzeuge GmbH, 80809 München (DE)
(72) Erfinder: VOLLMER, Otto, D-80689 München (DE)
(86) Internationale Anmeldenummer: EP9908060
(87) Internationale Veröffentlichungsnummer: WO00030912

(56) Entgegenhaltungen:
- EP-A- 0 544 104
- EP-A- 0 792 783
- US-A- 4 080 004

## Beschreibung

Die Erfindung betrifft eine Bremsanlage nach dem Gattungsbegriff des Patentanspruches 1. Eine solche Bremsanlage ist aus EP-A-0 792 783 bekannt.

Mit einer Federspeicher-Feststellbremse ausgestattete Bremsanlagen für Anhänger nach dem Stand der Technik sind als Standard-Bremsanlagen im allgemeinen von komplexer und kostenaufwendiger Bauart. Es kommt ein Anhänger-Bremsventil zur Anwendung, welchem ein sogenanntes Kombi-Löseventil vorgeschaltet ist. Darüber hinaus ist ein gesondertes Zweiwege- bzw. Wechselventil vorgesehen, das eine Belastung der mechanischen Bremse durch Kräfteaddition von Betriebsbremsteil und Federspeicherbremsteil an der Anhängerbremse verhindert. Bremsanlagen dieser Art sind mit Zweiknopf-Betätigung versehen, d.h. das Kombi-Löseventil arbeitet mit zwei Betätigungsknöpfen und ermöglicht im abgekuppelten und gebremsten Anhänger durch Hineindrücken beider Knöpfe die Membranzylinder/Federspeicherzylinder der Betriebsbremse und Feststellbremse vereinenden Kombizylinder zu lösen und das somit ungebremste Fahrzeug zu bewegen.

Davon ausgehend besteht die Aufgabe der Erfindung darin, den Aufbau von mit einer Federspeicher-Feststellbremse ausgestatteten Anhänger-Bremsanlagen unter Beibehaltung der Zweiknopf-Technik zu vereinfachen und kostengünstiger zu realisieren. Grundsätzlich soll es möglich sein, die Parkstellung des Anhängefahrzeugs sowohl im angekuppelten als auch im abgekuppelten Zustand desselben auch dann herbeizuführen, wenn infolge kurz- oder langfristiger Leckagen Druckverluste im Druckluftvorrat des Anhängefahrzeugs hinzunehmen sind.

Zur Lösung dieser Aufgabe dienen die Merkmale nach dem Kennzeichnungsteil des Patentanspruches 1.

Durch die Kombination von Löseeinheit, Parkeinheit und Notbremseinheit ist eine baulich einfach darzustellende Ventileinheit geschaffen, welche den zusätzlichen Einsatz eines Anhängerbremsventils erübrigt. Durch die Notbremseinheit erfolgt die automatische Abbremsung des Anhängefahrzeugs bei Bruch der Vorratsleitung nicht durch die Betriebsbremse des Anhängefahrzeugs, sondern über die Federspeicherbremsanlage, was einen wesentlichen Beitrag zur Funktionssicherheit und Zuverlässigkeit der Anhängerbremsanlage darstellt, dergestalt, daß bei Notbremsung keine Druckluftversorgung zur Betätigung der Betriebsbremse erforderlich ist und kurzoder langfristig auftretende Leckagen im Druckluftvorrat des Anhängefahrzeugs keinerlei negative Auswirkungen auf die Feststellbremsung erlangen. Die aus Löseeinheit, Parkeinheit und Notbremseinheit vorzugsweise als Ventilblock ausgebildete Baueinheit ist universell verwendbar; sie ist auch nachrüstbar. Unter Beibehaltung der Zweiknopf-Betätigung kann die bisher bekannte Sinnfälligkeit der Betätigungsformen und -möglichkeit beibehalten werden.

Vorteilhafte Ausgestaltungen und Weiterbildungen sind in weiteren Patentansprüchen aufgeführt.

Die Erfindung ist nachfolgend anhand eines Ausführungsbeispiels unter Bezugnahme auf die beigefügte Zeichnung erläutert.

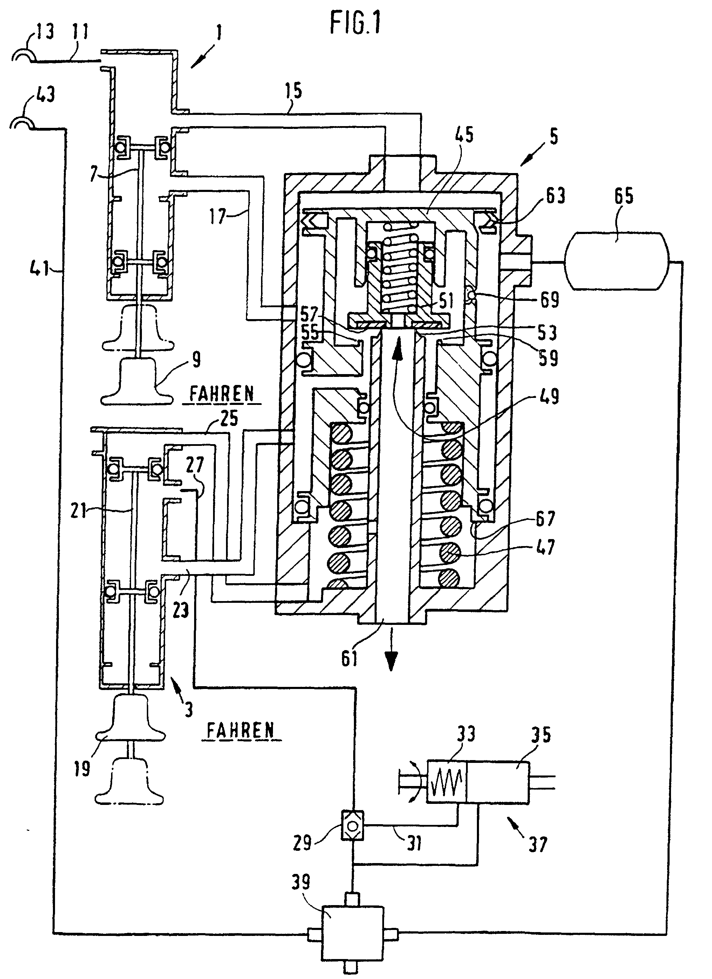

Figuren 1-5 sind Einzelschnittansichten des aus Löseeinheit. Parkeinheit und Notbremseinheit bestehenden Ventilblocks gemäß der Erfindung in seiner schaltungsgemäßen Zuordnung in einer Anhängerbremsanlage mit Federspeicher-Feststellbremse.

Das in den Figuren 1 - 5 dargestellte Park- und Rangierventil für Anhängefahrzeuge mit Federspeicher-Feststellbremsanlage ist als sogenanntes Kombiventil aus einer Löseeinheit 1. einer Parkeinheit 3 und einer Notbremseinheit 5 zusammengesetzt.

Die vorgenannten Bauteile sind in Wirkverbindung miteinander und dienen zum Einstellen der Positionen Fahren. Parken und Rangieren des Anhängefahrzeugs.

Die Löseeinheit 1 weist einen in einem Gehäuse verschiebbaren Schieber 7 mit einem Betätigungsknopf 9 auf. Sie ist über eine Leitung 11 an den Kupplungskopf "Vorrat" 13 angeschlossen, wobei durch den Schieber 7 der Löseeinheit positionsabhängig Leitungen 15 und 17 überwacht werden, welche in nachfolgend beschriebener Weise zur Notbremseinheit 5 führen.

Die Parkeinheit 3 ist in vergleichbarer Weise mit einem durch einen Betätigungsknopf 19 betätigbaren Schieber 21 versehen, welcher zur Notbremseinheit 5 führende Leitungen 23 und 25 als auch eine weitere Leitung 27 überwacht. Die Leitung 27 führt über ein Wechselventil 29 und eine Leitung 31 zu einem Federspeicherbremsteil 33, welcher zusammen mit einem Betriebsbremsteil 35 einen kombinierten Betriebsbrems- und Federspeicherbremszylinder 37 bilden kann oder in Alleinstellung vorgesehen ist.

An den kombinierten Betriebsbrems- und Federspeicherbremszylinder 37, auch Kombizylinder genannt, kann ein EBS-Modul 39 (Elektronisches Brems-System) in der aus Fig. 1 der Zeichnung ersichtlichen Weise angeschlossen sein. Das EBS-Modul 39 ist über eine Leitung 41 an den Kupplungskopf "Bremse" 43 des Anhängefahrzeugs angeschlossen. Bei gekuppeltem Anhängefahrzeug wird über den Kupplungskopf "Bremse" 43 und das nachgeschaltete EBS-Modul 39 als auch über eine Leitung 45 die Betriebsbremse des Kombizylinders in an sich bekannter Weise betätigt bzw. entlüftet, wobei das vorgenannte Wechselventil 29 eine Überbeanspruchung der mechanischen Bremse durch den Kombizylinder verhindert, da eine Überlagerung der Kräfte des Federspeicherbremsteils und des Betriebsbremsteils ausgeschlossen wird. Das Wechselventil 29 ist nicht auf dargestellte Baulage beschränkt, d. h. es läßt sich auch in der Parkeinheit 3 im Bereich des Anschlusses der Leitung 27 oder im EBS-Modul 39 integrieren.

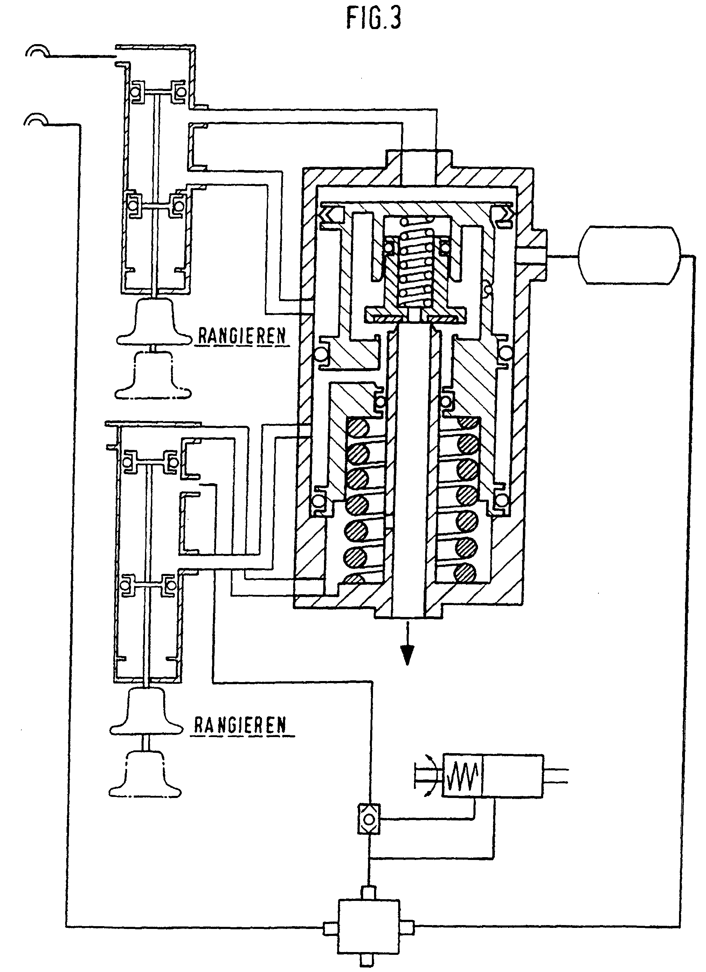

Innerhalb der Notbremseinheit 5 befindet sich ein in der Darstellung nach Figur 1 vom Vorratsdruck des Kuppiungskopfs "Vorrat" 13 über die Leitung 15 beaufschlagter Kolben 45, welcher in den Darstellungen nach Figur 1, 3, 4 und 5 unter Druckbeaufschlagung gegen die Kraft einer Feder 47 in seine untere Funktionsstellung verschoben ist. Im Inneren des Kolbens 45 befindet sich ein Einlaß-/Auslaßventil 49. welches durch einen gegen Federkraft verschiebbaren Ventilkörper 51, einen gehäusefesten Ventilsitz 53 und einen mit dem Kolben beweglichen Ventilsitz 55 gebildet ist. Der gehäusefeste Ventilsitz 53 wirkt mit dem Ventilkörper 51 als Auslaßventil 57 zusammen, während der mit dem Kolben verfahrbare Ventilsitz 55 mit dem Ventilkörper 51 das Einlaßventil 59 bildet. Das Auslaßventil 57 führt zu einem zur Atmosphäre führenden Anschluß 61, während das Einlaßventil in seiner geöffneten Position, wie in Figur 1 und 3 dargestellt, über Leitungsverbindungen mit dem Federspeicherbremsteil des Kombizylinders in Verbindung ist.

Nachfolgend ist die Funktion des aus Löseeinheit 1, Parkeinheit 3 und Notbremseinheit 5 bestehenden Park- und Rangierventil gemäß der Erfindung anhand der verschiedenen Funktionsdarstellungen der Figuren 1 - 5 erläutert.

Figur 1 zeigt den Betriebszustand des Anhängefahrzeugs in Fahrstellung, in welcher es mit dem Zugfahrzeug verbunden, also gekuppelt ist. Über die als Rückschlagventil ausgebildete Kolbenabdichtung 63 des Kolbens 45 wird ein an die Notbremseinheit 5 angeschlossener Vorratsbehälter 65 über den Kupplungskopf "Vorrat" 13 mit Druckluft vom Zugfahrzeug versorgt. Infolge der Druckbeaufschlagung ist der Kolben 45 in seiner unteren Funktionsstellung, d. h. in Anschlagposition an einem Anschlag 67 des Ventilgehäuses der Notbremseinheit. Das Einlaßventil 59 ist gemäß Darstellung geöffnet, d. h. Druckluft aus dem Vorratsbehälter 65 gelangt nach Passieren eines Rückschlagventils 69 durch das Einlaßventil 59 in die an die Parkeinheit angeschlossene Leitung 23. Der Betätigungsknopf 19 befindet sich in der Darstellung nach Figur 1 in seiner oberen Position. der Fahrstellung. so daß die Leitung 23 mit der Leitung 27 und demnach über das Wechselventil 29 mit dem Federspeicherbremsteil 33 in Verbindung steht. Die Lösekammer des Federspeicherbremsteils des Kombizylinders wird folglich mit Druckluft beaufschlagt. also die Federspeicher- bzw. Feststellbremse gelöst. Da die Leitung 41 drucklos ist. ist der Kombizylinder insgesamt in Löseposition, d. h. Zugfahrzeug und Anhänger sind bei gelöster Bremsanlage in Fahrstellung.

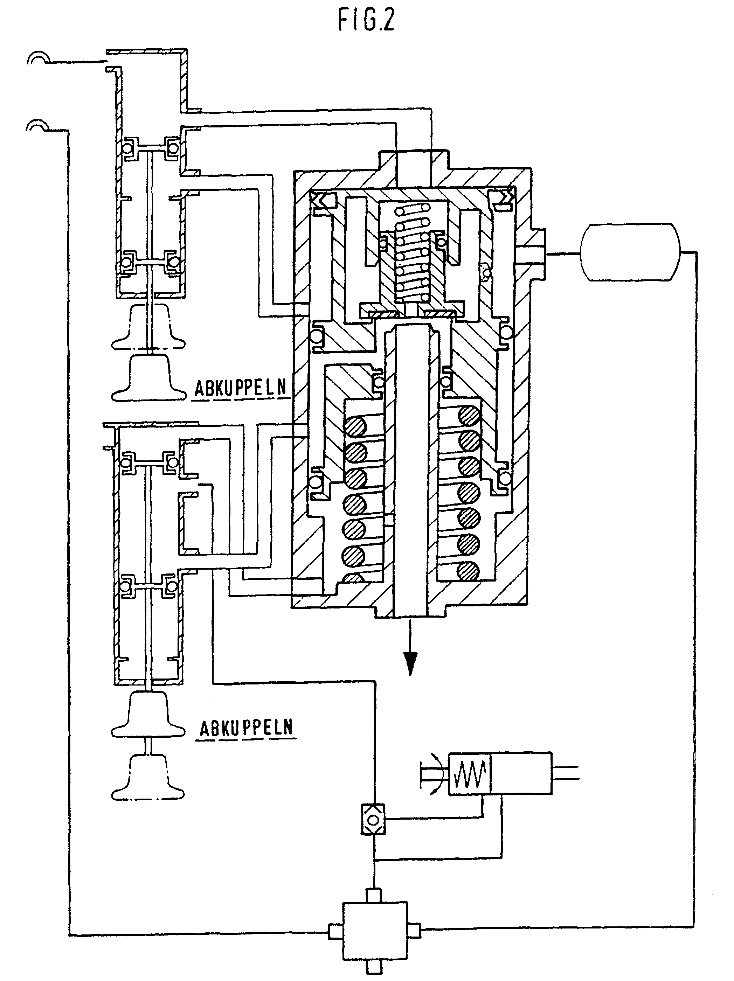

Figur 2 der Zeichnung zeigt das Kombiventil nach dem Abkuppeln des Anhängefahrzeuges vom Zugfahrzeug. Die Betätigungsknöpfe 9 und 19 verbleiben in ihren Positionen. Infolge der Entlüftung der Leitung 15 kehrt der Kolben 45 unter Wirkung der Feder 47 in seine obere Anschlagposition zurück. In dieser Position ist das Einlaßventil 59 geschlossen und das Auslaßventil 57, welches die Verbindung zum Anschluß 61 überwacht. ist geöffnet. Die zuvor genannten Verbindung über die Leitungen 27. 23 und Auslaßventil ist geöffnet, also entlüftet. so daß die Federspeicher- bzw. Feststellbremse zur Wirkung gelangt. Die mit dem Kupplungskopf "Bremse" 43 in Verbindung stehende Leitung 41 ist infolge des Abkuppelns gleichfalls entlüftet, so daß eine Addition der Bremskräfte am Kombizylinder verhindert wird. In diesem Betriebszustand ist das Anhängefahrzeug unter Einwirkung der Speicherfeder des Federspeicherbremsteils sicher abgebremst, eine eventuelle Leckage des Vorratsbehälters 65 ist folglich ohne Wirkung.

Der vorgenannte Betriebszustand stellt sich ebenfalls ein, wenn bei angekuppeltem Anhängefahrzeug ein Druckverlust in der Vorratsleitung auftritt und ein bestimmter Druck von z. B. 2.5 bar unterschritten wird. Dies führt zu einer automatischen Abbremsung des Anhängefahrzeugs.

Figur 3 der Zeichnung zeigt den Betriebszustand "Rangieren" bei abgekuppeltem Anhängefahrzeug. Hierzu ist der Betätigungsknopf 9 des Schiebers 7 nach oben zu schieben. während der Betätigungsknopf 19 in seiner in den Figuren 1 und 2 dargestellten Lage verbleibt. Bei druckloser Leitung 11 gelangt Druckluft aus dem Vorratsbehälter 65 nach Passieren des Rückschlagventils 69 in die Leitung 17, über die Löseeinheit 1 in die Leitung 15 und beaufschlagt den Kolben 45. Dieser nimmt folglich die in Figur 1 der Zeichnung bereits geschilderte Position ein. in dieser Position besteht Druckluftverbindung über die Parkeinheit 3 zum Federspeicherbremsteil, derart, daß die Speicherfeder mit Druck beaufschlagt wird und die Parkbremse gelöst ist. Bei abgekuppeltem Anhängefahrzeug ist die Leitung 41 wiederum drucklos, so daß das unter Relaiswirkung den Betriebsbremsteil des Kombizylinders speisende EBS-Modul nicht aktiviert wird. Der Kombizylinder ist somit in seiner Gesamtheit gelöst und das Anhängefahrzeug kann verschoben. also rangiert werden.

Wird nun der Anhänger mit dem Zugfahrzeug verbunden, dann erfolgt automatisch die Umschaltung in die in Figur 1 dargestellte Position. welche der Fahrstellung entspricht. Bei Ankuppeln des Kupplungskopfes "Vorrat" 13 mit dem entsprechenden Kupplungskopf des Zugfahrzeugs erfolgt die Druckbeaufschlagung des Schiebers 7, welcher folglich aus der in Figur 3 dargestellten Position nach unten in die in Figur 1 dargestellte Position, d.h. bis auf Anschlag, verschoben wird. Die Druckbedingungen an der Notbremseinheit 5 verbleiben unverändert, d.h. der zuvor über die Leitung 17 und die Leitung 15 mit Druckluft des Vorratsbehälters 65 beaufschlagte Kolben 45 verbleibt in seiner dargestellten Lage, da bei Verschiebung des Schiebers 7 die vorgenannte Druckbeaufschlagung des Kolbens 45 durch Druckbeaufschlagung über den Kupplungskopf "Vorrat" 13 abgelöst wird, so wie dies in Figur 1 ersichtlich ist.

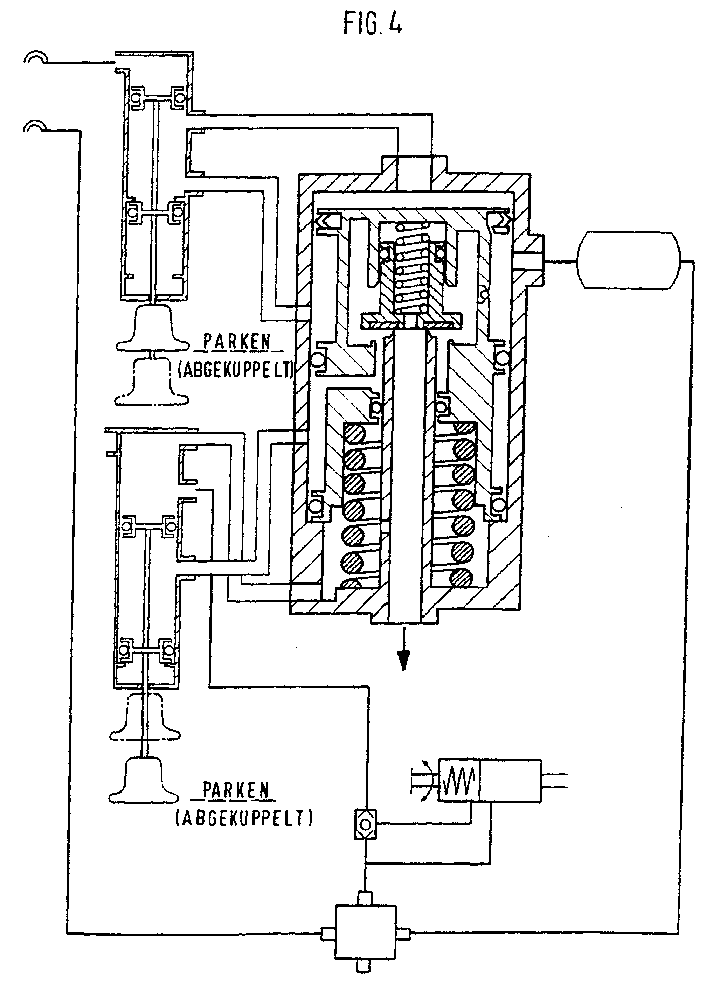

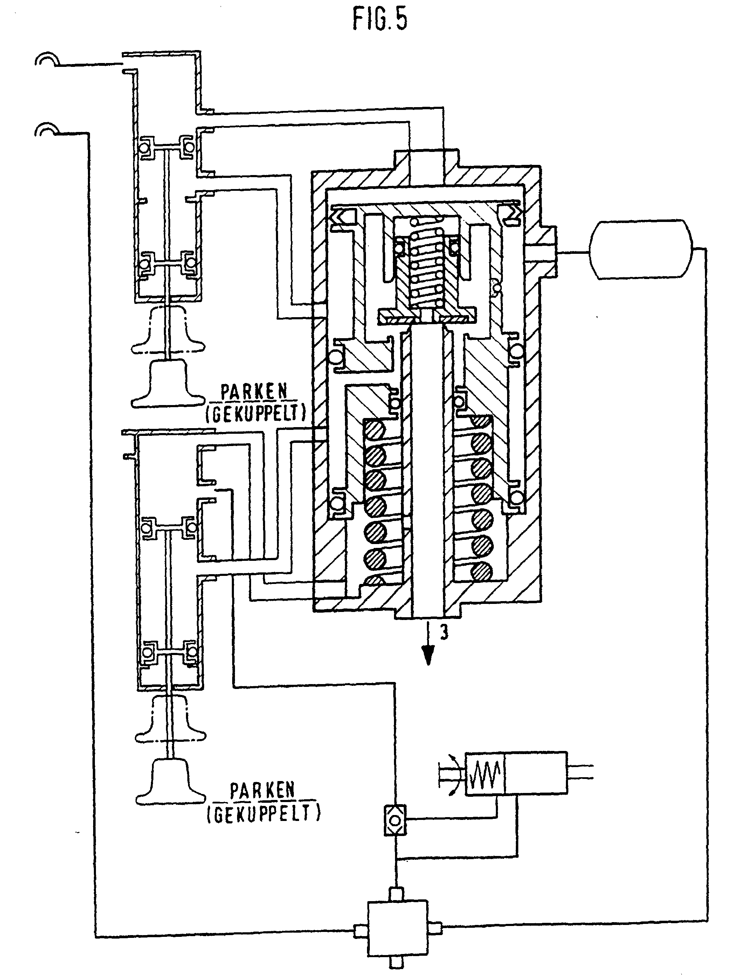

In den Figuren 4 und 5 der Zeichnung sind die Parkstellung des Anhängefahrzeuges in abgekuppeltem Zustand (Figur 4) und im gekuppelten Zustand (Figur 5) wiedergegeben. In der Position in Figur 4 befindet sich der Betätigungsknopf 9 in der unter Bezugnahme auf Figur 3 erläuterten Rangierstellung, während die Parkeinheit 3 durch Betätigung des Betätigungsknopfes 19, d.h. durch Verlagerung desselben in die Parkstellung, aktiviert wird. Als Folge dieser Betätigung der Parkeinheit wird die Leitung 27 und demnach über Wechselventil 29 und Leitung 31 der Federspeicherbremsteil 33 entlüftet. wobei die Leitung 27 über die Leitung 25 mit der Außenluft führenden Anschluß 61 in Verbindung ist. Der Federspeicherbremsteil 33 ist durch Entlüftung desselben aktiviert, d.h. die Feststellbremse des abgekuppelten Anhängefahrzeuges ist wirksam.

Eine Entlüftung des Federspeicherbremsteils 33. d.h. also die Aktivierung der Parkbremse. ist auch bei am Zugfahrzeug angekuppeltem Anhängefahrzeug möglich, wie die Positionen nach Figur 5 veranschaulichen. Wiederum ist der Betätigungsknopf 19 der Parkeinheit 3 betätigt, also nach unten gerichtet herausgezogen. so daß die zuvor genannte Entlüftung des Federspeicherbremsteils 33 in angekuppeltem Zustand eintritt. Sollte der Fahrer zu diesem Zeitpunkt die Betriebsbremse des Zugfahrzeugs betätigen. was die Aktivierung, also Druckbeaufschlagung der Leitung 41 über den Kupplungskopf ..Bremse" 43 zur Folge nat. dann hat dies infolge der Funktion des Wechselventils 29 keine nachteiligen Auswirkungen auf den Kombizylinder. Es findet keine Kräfteaddition von Federspeicherbremsteil und Betriebsbremsteil statt, da die Betriebsbremsbetätigung die zuvor genannte Federspeicherbremsbetätigung ablöst. Der Betriebsbremsdruck wird über das Wechselventil 29 sowohl im Federspeicherbremsteil 33 als auch im Betriebsbremsteil 35 wirksam. Im Federspeicherbremsteil 33 wird die Speicherfeder wieder gelöst. während im Betriebsbremsteil die Druckbeaufschlagung der Betriebsbremsmembrane oder dergleichen Betätigungsorgan erfolgt.

Die Position der Löseeinheit 1 ändert sich gegenüber der Position nach Figur 3 ebenfalls, da die Löseeinheit 1 beim Ankuppeln mit Druckluft des Kupplungskopfes "Vorrat" 13 beaufschlagt wird und demgemäß der Schieber 7 in die in Figur 5 dargestellte Position entsprechend "Fahrstellung" nach unten gerichtet auf Anschlag verschoben wird. Sowohl im abgekuppelten als auch im angekuppelten Zustand des Anhängefahrzeuges ist somit die Feststellbremsung desselben möglich.

Bei angekuppeltem Fahrzeug verhindert das am Kolben 45 integrierte Rückschlagventil 69 bei Druckabfall im Vorratsbehälter 65 während der Fahrt ein selbsttätiges Einbremsen, da der Federspeicherbremsteil belüftet. also geblöst bleibt. Das Rückschlagventil 69 ist in diesem Sinn als Druckabsicherung zwischen Vorratsbehälter und Federspeicher vorgesehen.

Wie vorstehend ausgeführt, verhindert das Wechselventil 29 eine Überbeanspruchung der mechanischen Bremse durch den Kombizylinder. da eine Überlagerung der Kräfte des Federspeicherbremsteiles und des Betriebsbremsteiles ausgeschlossen wird.

Sowohl die Löseeinheit 1 als auch die Parkeinheit 3 können in einer oder in allen Positionen mit einer Kraftschwelle versehen sein: es kann sich hierbei um eine federverspannte Kugelrastierung handeln, welche bei Betätigung zu überwinden ist. Bei der Parkeinheit 3 kann auch eine an sich bekannte Sperreinrichtung in der Parkstellung vorgesehen sein.

Die Erfindung ist nicht auf die dargestellte Anhängerbremsanlage mit einem kombinierten Betriebsbrems- und Federspeicherbremszylinder der in den Figuren 1-5 dargestellten Bauart beschränkt, d.h. Löseeinheit, Parkeinheit und Notbremseinheit können auch bei Anhängerbremsanlagen verwirklicht werden, bei weichen Federspeicherbremszylinder und Betriebsbremszylinder voneinander getrennt sind, also nicht auf eine gemeinsame Druckstange einwirken. In diesem Fall entfällt die Notwendigkeit eines Wechselventils. Die Erfindung ist in gleicher Weise nicht auf die Verwendung eines EBS-Moduls der dargestellten Art beschränkt.

### Bezugszeichenliste

- 1: Löseeinheit
- 3: Parkeinheit
- 5: Notbremseinheit
- 7: Schieber
- 9: Betätigungsknopf
- 11: Leitung
- 13: Kupplungskopf "Vorrat"
- 15: Leitung
- 17: Leitung
- 19: Betätigungsknopf
- 21: Schieber
- 23: Leitung
- 25: Leitung
- 27: Leitung
- 29: Wechselventil
- 31: Leitung
- 33: Federspeicherbremsteil
- 35: Betriebsbremsteil
- 37: kombinierter Betriebsbrems- und Federspeicherbremszylinder
- 39: EBS-Modul
- 41: Leitung
- 43: Kupplungskopf "Bremse"
- 45: Kolben
- 47: Feder
- 49: Einlaß-Auslaßventil
- 51: Ventilkörper
- 53: Ventilsitz
- 55: Ventilsitz
- 57: Auslaßventil
- 59: Einlaßventil
- 61: Anschluß
- 63: Kolbenabdichtung
- 65: Vorratsbehälter
- 67: Anschlag
- 69: Rückschlagventil

## Patentansprüche

1. Bremsanlage für Anhängefahrzeuge mit
einem Park- und Rangierventil, das eine Löseeinheit (1), eine Parkeinheit (3) und eine Notbremseinheit (5) aufweist, wobei an das Park- und Rangierventil ein Vorratsbehälter (65) und eine Federspeicher-Feststellbremse (33) angeschlossen ist,
Vorrats- und Bremsanschlüssen (13, 43), welche mit einer Zugfahrzeugbremsanlage kuppelbar sind, wobei der Vorratsanschluß (13) mit der Löseeinheit (1) verbunden ist und der Bremsanschluß (43) zur Ansteuerung eines Betriebsbrernszylinders (35) vorgesehen ist,
und mit einer Betätigungseinrichtung, die ein der Parkeinheit (3) zugeordnetes Betätigungsorgan mit einen Schieber (21) aufweist, und wobei
a) der Vorratsbehälter (65) an die Notbremseinheit (5) angeschlossen ist und die Notbremseinheit (5) ein Notbremsventil aufweist, wobei zum Befüllen des Vorratsbehälters (65) der Vorratsanschl uß (13) über die Löseeinheit (1) und das Notbremsventil mit dem Vorratsbehälter (65) verbindbar ist,
b) die Federspeicher-Feststellbremse (33) an die Parkeinheit (3) angeschlossen und die Parkeinheit (3) mit der Notbremseinheit (5) verbunden ist,
c) die Betätigungseinrichtung zusätzlich ein der Löseeinheit (1) zugeordnetes Betätigungsorgan mit einen Schieber (7) aufweist, und daß
d) die Federspeicher-Feststellbremse (33) in Abhängigkeit von den Schaltpositionen der Löseeinheit (1) und der Parkeinheit (3) und in Abhängigkeit, ob die Bremsanlage des Anhängefahrzeuges abgekuppelt oder angekuppelt ist, belüftet oder entlüftet ist, entsprechend einem der Zustände Fahren, Rangieren oder Parken
**gekennzeichnet durch** folgende Merkmale:
e) die Notbremseinheit (5) weist einen federvorgespannten Kolben (45) auf, der bei angekuppelten Vorrats- und Bremsanschlüssen (13, 43) über die Löseeinheit (1) vom Druck des Vorratsanschlusses beaufschlagbar ist und der unter Einwirkung des Vorratsdruckes entgegen der Federspannung in eine erste Schaltstellung verfahrbar ist;
f) der Vorratsbehälter (65) des Anhängers ist über ein am Kolben (45) befindliches, als Rückschlagventil wirkendes Dichtelement (63) gespeist, derart, daß der Vorratsbehälter bei Anschluß der Löseeinheit (1) an den Kupplungskopf "Vorrat" (13) mit Vorratsluft auffüllbar ist; und
g) das Notbremsventil der Notbremseinheit (5) weist ein Einlaß-/Auslaßventil (49) auf, welches die Verbindung zwischen dem Vorratsbehälter (65) und der nach Maßgabe der Position des Schiebers (21) die Verbindung zur Federspeicher-Feststellbremse steuernden Parkeinheit (3) einerseits und andererseits die Entlüftung des Federspeicherbremsteils überwacht, derart, daß in der ersten Schaltstellung des Kolbens (45) bei Druckbeaufschlagung desselben das Einlaßventil (59) des Einlaß-/Auslaßventils (49) geöffnet ist, während in der zweiten Schaltstellung bei infolge Abkuppelns des Fahrzeuges oder Leitungsbruches fehlender Druckbeaufschlagung des Kolbens (45) eine Entlüftungsverbindung des Federspeicherbremsteils (33) über die Parkeinheit (3) bei geschlossenem Einlaßventil (59) **durch** das geöffnete Auslaßventil (57) besteht.

2. Bremsanlage nach einem der vorangehenden Ansprüche, **gekennzeichnet durch** folgende Merkmale:
bei in die Löseeinheit (1) vollständig eingeschobenem Schieber (7) und bei in die Parkeinheit (3) vollständig eingeschobenem Schieber (21) ist die Schaltposition "Rangieren" gebildet, wobei der Federspeicherbremsteil der Federspeicher-Festellbremse über das geöffnete Einlaßventil (59) und die Parkeinheit (3) mit Druckluft aus dem Vorratsbehälter (65) beaufschlagt und gelöst ist.

3. Bremsanlage nach Anspruch 3, **gekennzeichnet durch** folgende Merkmale:
a) der Schieber (7) der Löseeinheit (1) ist - ausgehend von der Position "Rangieren" - bei Ankuppeln der Bremsanlage des Anhängefahrzeugs **durch** den am Vorratsanschluß (13) anstehenden Druck in die Position "Fahren" ausfahrbar;
b) die Schaltstellung des in der Position "Rangieren" eingefahrenen Schiebers (21) der Parkeinheit (3) bleibt In der Position "Fahren", wobei der Federspeicherbremsteil zum Zwecke des Lösens der Bremse mit Druckluft beaufschlagbar ist; und
c) bei in der Position "Fahren" selbsttätig ausgefahrenem Schieber (7) ist die in der Position "Rangieren" über den Vorratsbehälter (65) erfolgende Druckbeaufschlagung des Kolbens (45) der Notbremseinheit (5) **durch** die unmittelbare Druckbeaufschlagung aus dem Vorratsanschluß (13) abgelöst.

4. Bremsanlage nach einem der vorangehenden Ansprüche, **gekennzeichnet durch** folgende Merkmale;
die Parkstellung des Anhängefahrzeugs ist bei aus der Parkeinheit (3) herausgezogenem Schieber (21) sowohl in der Stellung "Rangieren" entsprechend eingefahrenem Schieber (7) als auch in der Stellung "Fahren" bei herausgezogenem Schieber (7) der Löseeinheit schaltbar, derart, daß der Federspeicherbremsteil über einen Entlüftungsanschluß (61) der Notbremseinheit (5) entlüftbar ist, so daß die Parkstellung sowohl im abgekuppelten als auch im angekuppelten Zustand der Bremsanlage möglich ist.

5. Bremsanlage nach einem der vorangehenden Ansprüche, **dadurch gekennzeichnet, daß** ein kombinierter Betriebsbrems- und Federspeicherbremszylinder (37) vorgesehen ist, welchem ein an die zum Be- und Entlüften vorgesehene Leitung (27) einerseits als auch an die zum Bremsanschluß (43) führende Leitung (41) andererseits angeschlossenes Wechselventil (29) vorgeschaltet ist, das zur Verhinderung einer Bremsdruckaddierung des Federspeicherbremsteils (33) und des Betriebsbremsteils (35) vorgesehen ist

6. Bremsanlage nach einem der vorangehenden Ansprüche, **gekennzeichnet durch** ein als Druckabsicherung für die Federspeicher-Feststellbremse wirkendes, zwischen Vorratsbehälter (65) und Einlaß-Auslaßventil (49) angeordnetes, in Richtung desselben öffnendes Rückschlagventil (69).

7. Bremsanlage nach einem der vorangehenden Ansprüche, **dadurch gekennzeichnet, daß** ein kombinierte Betriebsbrems- und Federspeicherbremszylinder (37) bei angekuppeltem Bremsanschluß (43) durch ein EBS-Modul (39) angesteuert ist, und daß das EBS-Modul (39) durch den Vorratsbehälter (65) gespeist ist.

8. Bremsanlage nach einem der vorangehenden Ansprüche, **dadurch gekennzeichnet, daß** die Löseeinheit (1) und die Parkeinheit (3) baulich mit der Notbremseinheit (5) integriert sind.

## Claims

1. Brake system for trailer vehicles comprising
a parking and manoeuvring valve which has a release unit (1 ), a parking unit (3) and an emergency brake unit (5), a reservoir (65) and a spring-loaded parking brake (33) being connected to the parking and manoeuvring valve,
reservoir and brake connections (13, 43), which can be coupled to a towing vehicle brake system, the reservoir connection (13) being connected to the release unit (1) and the brake connection (43) being provided to control an operating brake cylinder (35),
and comprising an actuating device having an actuating member with a slide (21) associated with the parking unit (3), and wherein
a) the reservoir (65) is connected to the emergency brake unit (5) and the emergency brake unit (5) has an emergency braking valve, wherein to fill the reservoir (65), the reservoir connection (13) can be connected via the release unit (1), and the emergency braking valve can be connected to the reservoir (65),
b) the spring-loaded parking brake (33) is connected to the parking unit (3) and the parking unit (3) is connected to the emergency brake unit (5),
c) the actuating device also has an actuating member (7) with a slide associated with the release unit (1 ), and that
d) the spring-loaded parking brake (33) is ventilated or vented, according to one of the states driving, manoeuvring or parking, as a function of the switching position of the release unit (1) and the parking unit (3) and as a function of whether the brake system of the trailer vehicle is decoupled or coupled,
**characterised by** the following features:
e) the emergency brake unit (5) has a spring-biased piston (45) which, when the reservoir and brake connections (13, 43) are coupled, can be loaded by the pressure of the reservoir connection via the release unit (1) and which can be moved into a first switching position counter to the spring tension under the action of the reservoir pressure;
f) the reservoir (65) of the trailer is fed via a sealing element (63) acting as a check valve and located on the piston (45), in such a way that the reservoir can be filled with stored air on connection of the release unit (1) to the coupling head "reservoir" (13); and
g) the emergency brake valve of the emergency brake unit (5) has an inlet/outlet valve (49) which, on the one hand, monitors the connection between the reservoir (65) and the parking unit (3) controlling the connection to the spring-loaded parking brake according to the position of the slide (21) and, on the other hand, monitors the venting of the spring-loaded braking part in such a way that the inlet valve (59) of the inlet/outlet valve (49) is opened in the first switching position of the piston (45) on pressure loading thereof, while in the second switching position, when there is no pressure loading of the piston (45) owing to decoupling of the vehicle or a line rupture, there is a venting connection of the spring-loaded braking part (33) through the opened outlet valve (57) via the parking unit (3) when the inlet valve (59) is closed.

2. Braking system according to any one of the preceding claims, **characterised by** the following features:
when the slide (7) is completely inserted into the release unit (1) and when the slide (21) is completely inserted into the parking unit (3) the switching position "manoeuvre" is formed, the spring-loaded braking part of the spring-loaded parking brake being loaded with compressed air from the reservoir (65) via the opened inlet valve (59) and the parking unit (3) and released.

3. Brake system according to claim 3, **characterised by** the following features:
a) the slide (7) of the release unit (1) can be pulled out into the position "drive" - starting from the position "manoeuvre" - when the brake system of the trailer vehicle is coupled by the pressure at the reservoir connection (13);
b) the switching position of the slide (21) of the parking unit (3) retracted in the position "manoeuvre" remains in the position "drive", wherein the spring-loaded braking part can be loaded with compressed air for the purpose of releasing the brake; and
c) when the slide (7) is automatically pulled out in the position "drive" the pressure loading of the piston (45) of the emergency brake unit (5) produced in the position "manoeuvre" via the reservoir (65) is released by the direct pressure loading from the reservoir connection (13).

4. Brake system according to any one of the preceding claims, **characterised by** the following features:
when the slide (21) is pulled out of the parking unit (3), the parking position of the trailer vehicle, both in the position "manoeuvre" corresponding to the retracted slide (7) and also in the position "drive" with the slide (7) of the release unit pulled out, is switchable, in such a way that the spring-loaded braking part can be vented via a venting connection (61) of the emergency brake unit (5), so the parking position is possible both in the decoupled and in the coupled state of the brake system.

5. Brake system according to any one of the preceding claims, **characterised in that** a combined operating brake and spring-loaded brake cylinder (37) is provided, connected downstream of which is a shuttle valve (29) connected to the line (27) provided for ventilating and venting, on the one hand, and also to the line (41) leading to the brake connection (43), on the other hand, the shuttle valve (29) being provided to prevent a braking pressure addition of the spring-loaded braking part (33) and of the operating braking part (35).

6. Brake system according to any one of the preceding claims, **characterised by** a check valve (69) acting as a pressure monitor for the spring-loaded parking brake and arranged between the reservoir (65) and inlet/outlet valve (49) and opening in the direction thereof.

7. Brake system according to any one of the preceding claims, **characterised in that** a combined operating brake and spring-loaded brake cylinder (37) is controlled by an EBS module (39) when the brake connection (43) is coupled, and **in that** the EBS module (39) is fed by the reservoir (65).

8. Brake system according to any one of the preceding claims, **characterised in that** the release unit (1) and the parking unit (3) are structurally integrated with the emergency brake unit (5).

## Revendications

1. Installation de freinage pour des véhicules tractés comprenant
une vanne de stationnement et de manoeuvre qui a une unité (1) de desserrage, une unité (3) de stationnement et une unité (5) de freinage en urgence, un réservoir (65) et un frein (33) d'immobilisation à ressort accumulateur étant raccordés à la vanne de stationnement et de manoeuvre,
des raccords (13, 43) qui peuvent être couplés à une installation de freinage de véhicules ferroviaires, le raccord (13) de réservoir communiquant avec l'unité (1) de desserrage et le raccord (43) de frein étant prévus pour commander un cylindre (35) de frein de fonctionnement,
et un dispositif d'actionnement qui a un organe d'actionnement associé à l'unité (3) de stationnement et ayant un tiroir (21)
et dans laquelle
a) le réservoir (65) est raccordé à l'unité (5) de freinage en urgence et l'unité (5) de freinage en urgence a une vanne de frein d'urgence, le raccord (13) du réservoir pouvant, pour remplir le réservoir (65), communiquer avec le réservoir (65) par l'intermédiaire de l'unité (1) de desserrage et de la vanne de frein d'urgence,
b) le frein (33) d'immobilisation à ressort accumulateur est raccordé à l'unité (3) de stationnement et l'unité (3) de stationnement est reliée à l'unité (5) de freinage en urgence,
c) le dispositif d'actionnement comporte, en outre, un organe (7) d'actionnement associé à l'unité (1) de desserrage et ayant un tiroir, et en ce que
d) le frein (33) d'immobilisation à ressort accumulateur est, en fonction des positions de commutation de l'unité (1) de desserrage et de l'unité (3) de stationnement et en fonction du point de savoir si l'installation de freinage du véhicule tracté est attelée ou désattelée, alimenté en air ou n'est pas alimenté en air conformément à l'un des états déplacement, manoeuvre ou stationnement,
**caractérisée par** les caractéristiques suivantes :
e) l'unité (5) de freinage en urgence a un piston (45) qui est mis sous précontrainte par un ressort qui peut être alimenté, lorsque les raccords (13, 43) de réservoir et de frein sont couplés, par l'intermédiaire de l'unité (1) de desserrage en la pression du raccord du réservoir et qui, sous l'action de la pression du réservoir, est mis à l'encontre de la tension du ressort, dans une première position de commutation ;
f) le réservoir (65) du véhicule tracté est alimenté par l'intermédiaire d'un élément (63) d'étanchéité se trouvant sur le piston (45) et agissant en tant que clapet antiretour de façon que le réservoir puisse être rempli d'air de réservoir lors du raccordement de l'unité (1) de desserrage à la tête d'accouplement « réservoir » (13) ; et
g) la vanne de frein d'urgence de l'unité (5) de freinage en urgence a une vanne (49) entrée/sortie qui surveille la communication entre le réservoir (65) et l'unité (3) de stationnement commandant, suivant la position du tiroir (21), la communication vers le frein d'immobilisation à ressort accumulateur d'une part et d'autre part surveille la mise hors circuit d'air de la partie de frein à ressort accumulateur de façon à ce que, dans la première position de commutation du piston (45), pour une alimentation en pression de celui-ci, la vanne (59) d'entrée de la vanne (49) d'entrée/sortie soit ouverte, tandis que dans la deuxième position de commutation, lorsqu'une alimentation en pression du piston (45) fait défaut en raison d'un désattelage du véhicule ou d'une rupture de conduit, il existe une communication de mise hors de circuit d'air de la partie (33) de frein à ressort accumulateur par l'intermédiaire de l'unité (3) de stationnement lorsque la vanne (59) d'entrée est fermée par l'ouverture de la vanne (57) de sortie.

2. Installation de freinage suivant l'une des revendications précédentes, **caractérisée par** les caractéristiques suivantes :
lorsque le tiroir (7) est entièrement rentré dans l'unité (1) de desserrage et lorsque le tiroir (21) est entièrement rentré dans l'unité (3) de stationnement, il est formé la position de commutation « maoeuvre », la partie du frein à ressort accumulateur du frein d'immobilisation à ressort accumulateur étant alimentée en air comprimé provenant du réservoir (65) par l'intermédiaire de la vanne (59) d'entrée qui est ouverte et de l'unité (3) de stationnement et étant desserrée.

3. Installation de freinage suivant la revendication 2, **caractérisée par** les caractéristiques suivantes :
a) le tiroir (7) de l'unité (1) de desserrage peut se mouvoir, en partant de la position « manoeuvre », lors du couplage de l'installation de freinage du véhicule tracté, sous l'effet de la pression régnant dans le raccord (13) du réservoir pour venir à la position « déplacement » ;
b) la position de commutation du tiroir (21) de l'unité (3) de stationnement, entré dans la position « manoeuvre » reste en la position « déplacement », la partie de frein à ressort accumulateur pouvant être alimentée en air comprimé afin de desserrer le frein ;
c) lorsque le tiroir (7) est sorti automatiquement dans la position « déplacement », l'alimentation en pression du piston (45) de l'unité (5) de freinage en secours, s'effectuant dans la position « manoeuvre » par l'intermédiaire du réservoir (65), est interrompue par l'alimentation directe en pression en provenance du raccord (13) du réservoir.

4. Installation de freinage suivant l'une des revendications précédentes, **caractérisée par** les caractéristiques suivantes :
la position de stationnement du véhicule tracté peut être commutée lorsque le tiroir (21) est sorti de l'unité (3) de stationnement, tant dans la position « manoeuvre » correspondant au tiroir (7) rentré que dans la position « déplacement », alors que le tiroir (7) de l'unité de desserrage est sorti, de façon à ce que la partie de frein à ressort accumulateur puisse être mise hors du circuit d'air par un raccord (61) de mise hors circuit de l'unité (5) de freinage en cas d'urgence de sorte que la position de stationnement est possible tant à l'état découplé qu'à l'état couplé de l'installation de freinage.

5. Installation de freinage suivant l'une des revendications précédentes, **caractérisée en ce qu'**il est prévu un cylindre (37) combiné de frein de fonctionnement et de frein à ressort accumulateur qui est monté en amont d'une vanne (29) à deux voies raccordée d'une part au conduit (27) prévu pour la mise dans le circuit et hors du circuit d'air et d'autre part au conduit (41) menant au raccord (43) de frein, vanne qui est prévue pour empêcher une addition de pression de freinage de la partie (33) de frein à ressort accumulateur et de la partie (35) de frein de fonctionnement.

6. Installation de freinage suivant l'une des revendications précédentes, **caractérisée par** un clapet antiretour (69) agissant comme sécurité à la pression pour le frein d'immobilisation à ressort accumulateur interposé entre le réservoir (65) et la vanne (49) d'entrée-sortie et s'ouvrant dans la direction de celle-ci.

7. Installation de freinage suivant l'une des revendications précédentes, **caractérisée en ce qu'**un cylindre (37) combiné de frein de fonctionnement et de frein à ressort accumulateur est commandé lorsque le raccord (43) de frein est couplé par un module (39) EBS et **en ce que** le module (39) EBS est alimenté par le réservoir (65).

8. Installation de freinage suivant l'une des revendications précédentes, **caractérisée en ce que** l'unité (1) de desserrage et l'unité (3) de stationnement sont intégrées du point de vue de la construction avec l'unité (5) de freinage en urgence.
